# EUROPÄISCHE PATENTSCHRIFT

(11) **EP 2 878 895 B1**
(45) Veröffentlichungstag und Bekanntmachung des Hinweises auf die Patenterteilung: **15.03.2017**
(21) Anmeldenummer: 14004009.8
(22) Anmeldetag: 27.11.2014
(51) Int. Cl.: F24B 1/02, F24H 1/12, F24H 7/00, F24H 9/00, F23B 80/04

(54) **Ofen zur Wärmeerzeugung**
Furnace for heat generation
Four de production de chaleur

(30) Priorität: 27.11.2013 DE 102013019954
(43) Veröffentlichungstag der Anmeldung: 03.06.2015
(73) Patentinhaber: Riener, Karl Stefan, 4563 Micheldorf (AT)
(72) Erfinder: Riener, Karl Stefan, 4563 Micheldorf (AT)
(74) Vertreter: Samson & Partner Patentanwälte mbB

(56) Entgegenhaltungen:
- AT-A2- 500 155
- DE-A1- 19 757 819
- FR-A1- 2 475 707

## Beschreibung

### GEBIET DER ERFINDUNG

Die vorliegende Erfindung bezieht sich auf einen Ofen zur Wärmeerzeugung und ein Verfahren zum Steuern einer Rauchgasführung in einem Ofen zur Wärmeerzeugung.

### HINTERGRUND DER ERFINDUNG

Es sind allgemein Öfen zur Wärmeerzeugung bekannt, die insbesondere zur Verbrennung von Holz, wie Scheitholz oder Pellets, geeignet sind. Solche Öfen werden typischerweise auch in Wohnräumen, z.B. in der Form eines Kaminofens aufgestellt.

Außerdem ist es bekannt, das bei der Verbrennung in einem Ofen entstehende Rauchgas durch einen Wärmetauscher zu leiten, um Wärme aus dem Rauchgas an ein Wärmespeichermedium in dem Wärmetauscher für eine sofortige oder spätere Wärmeabgabe abzugeben.

Als Wärmespeichermedium für einen Wärmetauscher ist z.B. Wasser bekannt, wie es auch beispielhaft die deutsche Patentschrift DE 102009 050 507 B4 offenbart.

Daneben sind aber auch andere Materialien als Wärmespeichermedium bekannt, wie z.B. Schamottesteine, Betonsteine, usw., oder auch Latentwärmespeichermaterialien, die geeignet sind, latente Wärme zu speichern. Ein Scheitholz- bzw. Pelletofen mit einem Latentwärmespeicher ist zum Beispiel aus der deutschen Patentschrift DE 10 2008 057 911 B4 bekannt.

Bei den bekannten Öfen mit Wärmetauscher wird das Rauchgas oftmals ungesteuert durch den Wärmetauscher geleitet, sodass z.B. das Rauchgas auch dann durch den Wärmetauscher geleitet wird, wenn dieser bereits erwärmt ist und so keine oder nur wenig Wärme von dem Rauchgas an das Wärmespeichermaterial des Wärmetauschers übertragen wird. Dementsprechend wird in diesem Fall die Wärme aus dem Rauchgas nicht weiter verwertet, sondern das warme Rauchgas wird durch den Schornstein ins Freie geleitet. Bei Wärmetauschern, die Wasser als Wärmespeichermedium verwenden, kann eine thermische Ablaufsicherung vorgesehen sein, die Wasser ablaufen lässt, wenn sich das Wasser im Wärmespeicher aufgrund zu starker Erwärmung zu stark ausdehnt.

Die Druckschrift AT 500 155 A2 offenbart einen Ofen nach dem Oberbegriff von Anspruch 1. Danach weist der bekannte Ofen einen zentralen Brennraum auf, der über ein Rauchgasverbindungsrohr mit einem Kachelofen verbunden ist. Weiterhin schließt an den Brennraum ein Wasserwärmetauscher an, der von den Verbrennungsgasen aus dem Brennraum durchströmt werden kann. In der Rohrverbindung zwischen dem Brennraum und dem Kachelofen ist eine Klappe eingebaut. In einem Abzugsrauchrohr nach dem Wasserwärmetauscher ist ebenfalls eine Klappe eingebaut. Diese beiden Klappen sind durch ein Gestänge so verbunden, dass jeweils eine Klappe offen und eine Klappe geschlossen ist, sodass die Verbrennungsgase aus dem Brennraum entweder den Wasserwärmetauscher oder den Kachelofen durchströmen.

Die Druckschrift FR 2 475 707 offenbart ferner einen Ofen-Wärmetauscher, der zwischen zwei Abschnitten der Rauchgasführung eingebaut ist.

Aufgabe der vorliegenden Erfindung ist es, einen verbesserten Ofen zur Wärmeerzeugung, insbesondere Holzofen, wie Scheitholzofen oder Pelletofen, und ein Verfahren zur Steuerung einer Rauchgasführung in einem Ofen bereitzustellen.

Nach einem ersten Aspekt stellt die vorliegende Erfindung einen Ofen zur Wärmeerzeugung, insbesondere Holzofen, wie Scheitholzofen oder Pelletofen, in Übereinstimmung mit dem unabhängigen Anspruch 1 bereit. Nach einem zweiten Aspekt stellt die vorliegende Erfindung ein Verfahren zum Steuern einer Rauchgasführung in einem Ofen zur Wärmeerzeugung, insbesondere einem Ofen nach dem ersten Aspekt, in Übereinstimmung mit Anspruch 8 bereit.

Bevorzugte Merkmale der vorliegenden Erfindung ergeben sich aus den abhängigen Ansprüchen, der beigefügten Zeichnung und der nachfolgenden Beschreibung bevorzugter Ausführungsbeispiele.

### KURZBESCHREIBUNG DER ZEICHNUNG

Ausführungsbeispiele der Erfindung werden nun beispielhaft und unter Bezugnahme auf die beigefügte Zeichnung beschrieben, in der:
Fig. 1 ein Ausführungsbeispiel eines Pelletofens gemäß der vorliegenden Erfindung in einer rein schematischen Darstellung veranschaulicht;
Fig. 2 eine Steuerung des Pelletofens mit zugehörigen Komponenten schematisch zeigt;
Fig. 3 ein Ablaufschema eines Verfahrens, das in der Steuerung nach Fig. 2 abläuft illustriert; und
Fig. 4a und 4b ein Ausführungsbeispiel eines Ofens mit einem Brennraummodul und zwei Wärmetauschermodulen schematisch veranschaulichen.

### BESCHREIBUNG DER BEVORZUGTEN AUSFÜHRUNGSBEISPIELE

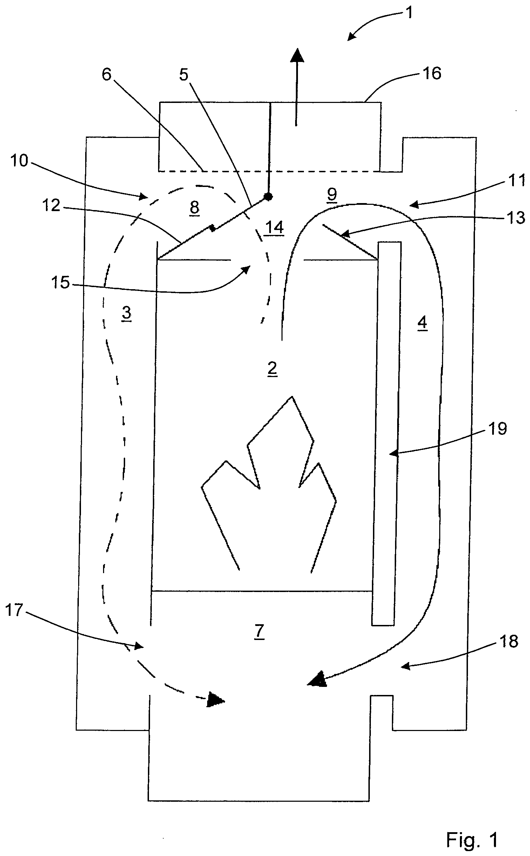

In Fig. 1 ist ein Ausführungsbeispiel eines Pelletofens 1 gemäß der vorliegenden Erfindung veranschaulicht. Vor einer detaillierten Beschreibung folgen zunächst allgemeine Erläuterungen zu den Ausführungsbeispielen und deren Vorteile.

Manche Ausführungsbeispiele betreffen einen Ofen zur Wärmeerzeugung, insbesondere Holzofen, wie Scheitholzofen oder Pelletofen. Der Ofen umfasst einen Brennraum, der dazu eingerichtet ist, festen Brennstoff, der insbesondere auf Holz basiert, aufzunehmen. Der Brennstoff kann feste Biomasse umfassen und stückig ausgebildet sein, wie es z.B. bei Scheitholz, Pellets, Hackschnitzelgut oder dergleichen der Fall ist.

Der Ofen umfasst weiter eine Rauchgasführung, die mit dem Brennraum verbunden ist, sodass Rauchgas, das bei der Verbrennung des festen Brennstoffes im Brennraum entsteht, in die Rauchgasführung gelangt. Die Rauchgasführung weist wenigstens einen ersten Rauchgasabschnitt und einen zweiten Rauchgasabschnitt auf. Der erste Rauchgasabschnitt ist mit einem ersten Wärmetauscher koppelbar und der zweite Rauchgasabschnitt ist mit einem zweiten Wärmetauscher koppelbar. Die Rauchgasführung kann als zylindrisches Rohr, als geschweißte Stahlblechkonstruktion oder dergleichen ausgebildet sein und ist dazu eingerichtet, das Rauchgas entsprechend zu führen. Der erste und der zweite Rauchgasabschnitt können z.B. ebenfalls als Rohre ausgebildet sein und entsprechend an den ersten bzw. zweiten Wärmetauscher angeschlossen werden.

Außerdem umfasst der Ofen eine Rauchgasführungseinrichtung, die dazu ausgelegt ist, Rauchgas wahlweise in den ersten und/oder zweiten Rauchgasabschnitt zu leiten.

Die Rauchgasführungseinrichtung kann ein oder mehrere Stellelemente aufweisen. Das Stellelement kann z.B. als Rauchgasklappe, Drehscheibe oder dergleichen ausgestaltet sein. Die Rauchgasführungseinrichtung kann manuell oder auch automatisch, z.B. über einen elektrischen oder hydraulischen Stellantrieb betreibbar sein, der die Stellung des Stellelements entsprechend verändern kann.

Je nach Einstellung der Rauchgasführungseinrichtung kann folglich das Rauchgas in den ersten oder den zweiten Rauchgasabschnitt geleitet werden, sodass Rauchgas wahlweise entweder den ersten oder den zweiten Wärmetauscher durchströmt. Außerdem kann die Rauchgasführungseinrichtung dazu ausgelegt sein, Rauchgas sowohl in den ersten als auch den zweiten Rauchgasabschnitt zu leiten, wobei bei manchen Ausführungsbeispielen der Rauchgasanteil für den ersten und zweiten Rauchgasabschnitt einstellbar ist. Damit kann die Rauchgasführungseinrichtung folglich das Rauchgas in den ersten und/oder den zweiten Rauchgasabschnitt und damit auch in und/oder den zweiten Wärmetauscher leiten.

Damit kann je nach Einstellung der Rauchgasführungseinrichtung der erste, der zweite oder ein oder mehrere weitere Rauchgasabschnitte und folglich der bzw. die daran gekoppelten Wärmetauscher selektiv mit einer vorgegebenen Rauchgasmenge beschickt werden.

Folglich kann z.B. zunächst der erste Rauchgasabschnitt und der daran gekoppelte erste Wärmetauscher und dann nach einer vorgegebenen Zeitdauer oder bei Vorliegen eines bestimmten Betriebsparameterwertes, der zweite Rauchgasabschnitt und der daran gekoppelte zweite Wärmetauscher mit Rauchgas beschickt werden (oder umgekehrt oder auch gleichzeitig, wie oben ausgeführt).

Bei manchen Ausführungsbeispielen weist der Ofen weiter eine Sammelrauchgasführung auf, in der das Rauchgas aus dem ersten und dem zweiten Rauchgasabschnitt nach Passieren des ersten und zweiten Wärmetauschers gesammelt wird. Die Sammelrauchgasführung ist an einen Kamin koppelbar, sodass das Rauchgas, das durch den ersten bzw. zweiten Rauchgasführungsabschnitt geleitet wird, gemeinsam durch die Sammelrauchgasführung in den Kamin abgeführt werden kann.

Bei manchen Ausführungsbeispielen weist der Ofen weiter einen Rauchgasabzug auf, wobei die Rauchgasführungseinrichtung weiter dazu ausgelegt ist, Rauchgas direkt unter Umgehung des ersten und zweiten Rauchgasabschnittes in den Rauchgasabzug zu leiten. Diese Einstellung wird auch "Bypass-Einstellung" genannt, da in diesem Fall das Rauchgas nicht in den ersten und zweiten Rauchgasabschnitt, sondern direkt in den Rauchgasabzug geleitet wird, sodass kein Rauchgas durch den ersten oder zweiten Rauchgasabschnitt strömt und damit auch kein Rauchgas durch damit gekoppelte Wärmetauscher strömt.

Auch wenn hier von einem ersten und einem zweiten Wärmetauscher gesprochen wird, ist die vorliegende Erfindung nicht auf eine bestimmte Anzahl von Wärmetauschern begrenzt. Manche Ausführungsbeispiele weisen z.B. drei oder mehr Wärmetauscher auf. Die Rauchgasführungseinrichtung ist folglich bei manchen Ausführungsbeispielen entsprechend dazu eingerichtet, Rauchgas wahlweise durch drei oder mehr Wärmetauscher zu leiten. Dementsprechend kann bei manchen Ausführungsbeispielen die Rauchgasführungseinrichtung auch drei oder mehr Rauchgasabschnitte aufweisen, wobei jeder Rauchgasabschnitt einem oder mehreren Wärmetauschern zugeordnet ist.

Bei manchen Ausführungsbeispielen weist der erste Wärmetauscher ein erstes Wärmespeichermedium auf und der zweite Wärmetauscher weist ein zweites Wärmespeichermedium auf. Das erste und das zweite Wärmespeichermedium können gleich oder unterschiedlich sein. Zum Beispiel kann bei manchen Wärmetauschern die Wärme aus dem Rauchgas an (Konvektions-)Luft als Wärmespeichermedium abgegeben werden, die dann als erwärmte Luft aus dem Wärmetauscher strömt und einen Aufstellraum, in dem der Ofen angeordnet ist, erwärmt. Das Wärmespeichermedium kann aber auch Wasser oder ein Latentwärmespeichermedium, wie Wachs, Paraffin, bestimmte Salzlösungen (Salzhydrate) Graphit oder dergleichen aufweisen, oder Steine als Wärmespeichermedium, wie z.B. Schamottesteine, Kacheln, Specksteine, Betonsteine oder dergleichen. Bei solchen Wärmetauschern kann die von dem Rauchgas an das Wärmespeichermedium abgegebene Wärme in dem Wärmespeichermedium für eine spätere Verwendung gespeichert werden. Um die Wärme aus dem gespeicherten Wärmespeichermedium bei Bedarf abzugeben, kann zum Beispiel Luft durch den Wärmetauscher bzw. das Wärmespeichermedium des Wärmetauschers geleitet und dadurch erwärmt werden. Die Luft kann z.B. also Konvektionsluft aus dem Ofen an die Umgebung abströmen und so den Aufstellraum des Ofens oder aber auch mittels geführter Konvektionsluft einen entfernten Raum erwärmen. Der oder die Wärmetauscher können auch in einem nahe liegenden bzw. dem Aufstellraum angrenzenden Raum angeordnet sein und wären somit nicht direkt im Aufstellraum des Ofens angeordnet.

Bei manchen Ausführungsbeispielen weist der Ofen weiter ein Rauchgasgebläse auf, das dazu eingerichtet ist, das Rauchgas durch die Rauchgasführung und den ersten und/oder zweiten Rauchgasabschnitt zu leiten. Das Rauchgasgebläse kann das Rauchgas aus dem Brennraum absaugen und durch die Rauchgasführung mit dem ersten und zweiten (oder weiteren) Rauchgasabschnitten leiten und so eine vorgegebene Strömungsgeschwindigkeit, die z.B. unabhängig von einem in einem Kamin ausgebildeten Rauchgaszug ist, in der Rauchgasführung erzielen.

Bei manchen Ausführungsbeispielen weist der Ofen weiter eine Steuerung auf, die dazu eingerichtet ist, die Rauchgasführungseinrichtung in Abhängigkeit wenigstens eines Betriebsparameters zu steuern, der spezifisch für den ersten und/oder zweiten Wärmetauscher ist.

Die Steuerung hat z.B. einen Mikroprozessor und einen Speicher. Außerdem kann am ersten und/oder zweiten Wärmetauscher jeweils wenigstens ein Sensor angeordnet sein, der mit der Steuerung gekoppelt ist, wobei der Sensor jeweils wenigstens einen Betriebsparameter für den Wärmetauscher ermittelt. Ein Betriebsparameter kann z.B. eine Temperatur eines Wärmespeichermediums des Wärmetauschers sein oder ein Füllstand, z.B. bei einem wasserführenden Wärmetauscher, etc. Der Sensor kann den Betriebsparameter an die Steuerung übermitteln. Die Steuerung kann dazu eingerichtet sein, den empfangenen Betriebsparameter mit einem vorgegebenen und im Speicher abgespeicherten Schwellwert zu vergleichen. Stellt die Steuerung bspw. fest, dass der vom Sensor empfangene Betriebsparameterwert den Schwellwert übersteigt, so kann die Steuerung ein entsprechendes Steuersignal an die Rauchgasführungseinrichtung senden, die dann z.B. das Rauchgas durch den anderen Wärmetauscher leitet, für den der empfangene Betriebsparameterwert nicht oberhalb eines Schwellwerts liegt.

Bei manchen Ausführungsbeispielen kann zum Beispiel der erste Wärmetauscher ein flüssiges Wärmespeichermedium aufweisen und der zweite Wärmetauscher ein nichtflüssiges Wärmespeichermedium, z.B. ein gasförmiges, wie Luft, oder ein festes, wie z.B. Schamottesteine oder dergleichen oder ein Latentwärmespeichermaterial. Stellt nun die Steuerung fest, dass das flüssige Wärmespeichermedium eine Betriebstemperatur oder eine Ausdehnung (Füllstand) erreicht hat, die oberhalb eines vorgegebenen Schwellwertes liegt, so kann die Steuerung die Rauchgasführungseinrichtung derart steuern, dass das Rauchgas durch den zweiten Wärmetauscher geleitet wird, der das nicht-flüssige Wärmespeichermedium enthält. Sollte nun zum Beispiel nach einer gewissen Zeit das Wärmespeichermedium des zweiten Wärmetauschers ebenfalls eine Temperatur erreicht haben, die oberhalb eines Schwellwerts liegt, der gleich oder von dem Schwellwert für den ersten Wärmetauscher verschieden sein kann, so kann z.B. die Steuerung die Rauchgasführungseinrichtung in die oben erklärte Bypass-Einstellung setzen, in der das Rauchgas nicht mehr durch den ersten und zweiten Rauchgasabschnitt geleitet wird, sondern direkt in den Rauchgasabzug.

Auf die Art und Weise ist z.B. eine thermische Ablaufsicherung für das Wärmespeichermedium im Wärmetauscher nicht notwendig und ein Überhitzen eines Wärmespeichermediums kann vermieden werden, während gleichzeitig die in dem Rauchgas enthaltene Wärme optimal ausgenutzt wird.

Außerdem ist ein kontinuierlicher Betrieb des Ofens möglich, da es zu keinerlei Überhitzung eines Wärmespeichermediums kommen kann, da das Rauchgas bei drohender Überhitzung eines Wärmespeichermediums entweder durch den Rauchgasabschnitt geleitet wird, an dem ein Wärmetauscher gekoppelt ist, dessen Temperatur des Wärmespeichermediums noch unterhalb des Schwellwerts liegt, oder weil die Bypass-Einstellung eingestellt wird oder weil z.B. der Wärmetauscher einen festen Wärmespeicher aus Schamottesteinen oder dergleichen hat, der aufgrund der baulichen Konstruktion nicht überhitzen kann.

Außerdem ist es durch die Steuerung der Rauchgasmenge durch den ersten bzw. zweiten Rauchgasabschnitt und den jeweils daran gekoppelten Wärmetauscher möglich, gezielt eine bestimmte Wärmemenge an den jeweiligen Wärmetauscher abzugeben, sodass auch die Wärmeabgabe des entsprechenden Wärmetauschers steuerbar ist. Dadurch ist es z.B. bei (Konvektions-)Luft-Wärmetauschern möglich, die Erwärmung der abzugebenden Luft durch die Steuerung der durch den Wärmetauscher geleiteten Rauchgasmenge zu steuern. Dementsprechend kann bei manchen Ausführungsbeispielen auch die Steuerung der Rauchgasführungseinrichtung und die damit verbundene Rauchgasmenge, die durch den ersten und/oder zweiten Rauchgasabschnitt geleitet wird, von einer vorgegebenen Temperatur abhängen, die z.B. an der Steuerung des Ofens oder an einer Steuerung für eine Raumtemperatur vorgegeben wird.

Nach der Erfindung ist der Brennraum als Brennraummodul ausgebildet und der erste und/oder zweite Wärmetauscher ist als austauschbares Wärmetauschermodul ausgebildet. Dadurch können an ein Brennraummodul unterschiedliche Wärmetauschmodule angebracht werden, was bspw. die Lagerhaltung für Öfen erleichtert, da das Brennraummodul und die Wärmetauschermodule getrennt voneinander gelagert werden können. Außerdem können das Brennraummodul und das oder die zugehörigen Wärmetauschermodule getrennt voneinander transportiert werden, wobei die Montage z.B. am Aufstellungsort erfolgen kann, was den Transport und die Aufstellung des Ofens erleichtert. Durch das Vorsehen eines Brennraummodules und eines oder mehrerer Wärmetauschermodule ist bei manchen Ausführungsbeispielen ein Baukastensystem für einen Ofen realisiert, wobei je nach Kundenwunsch und Anforderung, z.B. an die Größe und Leistung des Ofens, verschiedenen Wärmetauschermodule mit einem entsprechenden Brennraummodul kombinierbar sind. Die Wärmetauschermodule können unterschiedlichen Wärmespeichermaterialien enthalten, wie es schon oben für den Wärmetauscher ausgeführt wurde, und sie können eine unterschiedliche äußere Formgebung, Farbe, Dimensionierung usw. aufweisen.

Der Ofen kann ein Brennraummodul und ein, zwei oder sogar mehr Wärmetauscher-module umfassen. Das Brennraummodul kann eine oder mehrere Schnittstellen umfassen, an denen ein oder mehrere Wärmetauschermodule angebracht werden können. Die Schnittstelle kann einen Befestigungsabschnitt und/oder einen Abschnitt für die Kopplung an die Rauchgasführung aufweisen, sodass nach Anbringen eines Wärmetauschermoduls an das Brennraummodul das Rauchgas, je nach Einstellung der Rauchgasführungseinrichtung (wie oben ausgeführt), durch das Wärmetauschermodul geleitet werden kann. Durch das Vorsehen einer vorgegebenen Schnittstelle und das Ausstatten der Wärmetauschermodule mit einer entsprechenden passenden Schnittstelle, kann ein Wärmetauschermodul einfach an das Brennraummodul angebracht werden und mit ihm verbunden werden. Dadurch kann zum Beispiel das Brennraummodul je nach Bedarf mit einem Wärmetauschermodul, das Wasser als Wärmespeicher verwendet, und mit einem Wärmetauschermodul, das ein anderes Wärmespeichermedium, z.B. ein Latentwärmespeichermedium, verwendet oder als Rauchgaswärmetauscher ausgebildet ist, ausgestattet werden (oder jede beliebige andere Kombination).

Wie erwähnt kann der Ofen ein oder mehrere Wärmetauschermodule aufweisen. Weist der Ofen mehrere Wärmetauschermodule auf, so kann er einen Rauchgassammelbereich, wie z.B. die oben erwähnte Sammelrauchgasführung, umfassen, in dem das Rauchgas nach Passieren der Wärmetauschermodule gesammelt wird, wie es auch schon oben ausgeführt wurde. Der Rauchgassammelbereich kann dann zum Beispiel mit einem Rauchgasabzug gekoppelt werden, sodass das Rauchgas aus dem Rauchgassammelbereich abgeleitet werden kann.

Das bzw. die Wärmetauschermodule können direkt an dem Brennraummodul und/oder entfernt von dem Brennraummodul angeordnet sein, wie es schon oben ausgeführt wurde, wobei bei entfernter Anordnung die Verbindung zwischen Wärmetauschermodul und Rauchgasführung über einen Verbindungskanal herstellbar ist. Der Verbindungskanal kann auch flexibel ausgestaltet sein.

Manche Ausführungsbeispiele betreffen ein Verfahren zum Steuern einer Rauchgasführung in einem Ofen zur Wärmeerzeugung, insbesondere einem Ofen wie er oben beschrieben wurde, wobei der Ofen einen Brennraum umfasst, eine Rauchgasführung, die mit dem Brennraum verbunden ist und die wenigstens einen ersten Rauchgasabschnitt und einen zweiten Rauchgasabschnitt aufweist, wobei der erste Rauchgasabschnitt mit einem ersten Wärmetauscher koppelbar ist und der zweite Rauchgasabschnitt mit einem zweiten Wärmetauscher koppelbar ist, und eine Rauchgasführungseinrichtung, die dazu ausgelegt ist, Rauchgas wahlweise in den ersten und/oder zweiten Rauchgasabschnitt zu leiten, wie es oben bereits ausgeführt wurde. Außerdem kann der Ofen zum Beispiel eine Steuerung aufweisen, die dazu eingerichtet ist, das oben und im Folgenden beschriebene Verfahren wenigstens teilweise auszuführen.

Das Verfahren zum Steuern der Rauchgasführung in dem Ofen umfasst dabei den Schritt des Erfassens wenigstens eines Betriebsparameters, der spezifisch für den Betriebszustand des ersten und/oder zweiten Wärmetauschers ist, wie es auch oben ausgeführt wurde. Außerdem umfasst das Verfahren den Schritt des Steuerns der Rauchgasführungseinrichtung in Abhängigkeit des erfassten Betriebsparameters, wie es ebenfalls oben bereits ausgeführt wurde.

Bei manchen Ausführungsbeispielen spezifiziert der Betriebsparameter eine Betriebstemperatur des ersten Wärmetauschers und/oder des zweiten Wärmetauschers, wie es oben im Detail erklärt wurde. Außerdem kann, wie oben erläutert, der Betriebsparameter auch einen anderen Betriebszustand eines Wärmetauschers spezifizieren, wie zum Beispiel einen Füllstand.

Zurückkommend zu Fig. 1 ist dort ein Ofen 1, der z.B. als Pelletofen ausgestaltet ist, schematisch dargestellt. Der Ofen 1 hat einen Brennraum 2, an dessen in Fig. 1 linken Seite ein erster Wärmetauscher 3 angeordnet ist, der hier beispielhaft mit Wasser als Wärmespeichermedium ausgeführt ist. An der in Fig. 1 rechten Seite des Brennraums 2 ist mit einem gewissen Abstand 19 zum Brennraum 2 ein zweiter Wärmetauscher 4 angeordnet, der mit einem Latentwärmespeichermedium ausgestattet ist.

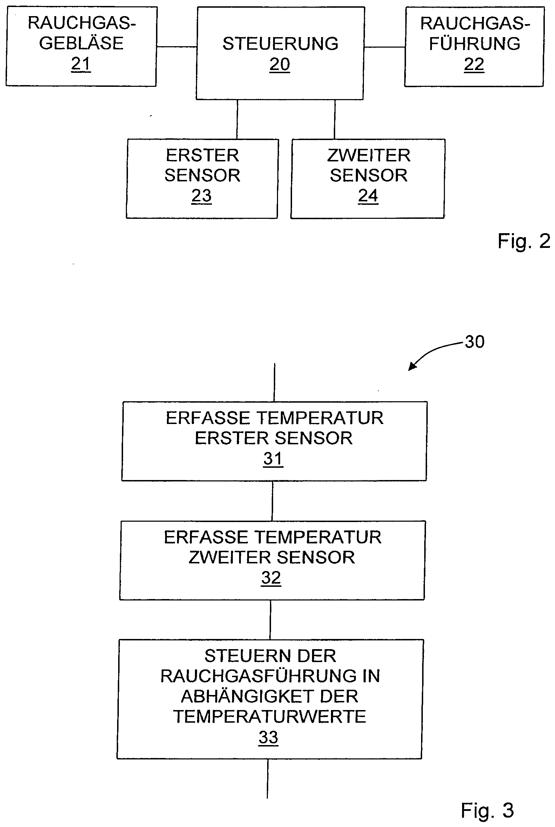

Der Ofen 1 hat am in Fig. 1 oberen Ende einen Durchgang 15, durch den die im Brennraum 2 entstehenden Rauchgase in eine Rauchgasführung 14 strömen. Das Rauchgas kann z.B. durch ein Rauchgasgebläse 21, das im Zusammenhang mit der Steuerung in Fig. 2 gezeigt ist, entsprechend mit einer vorgegebenen Strömungsgeschwindigkeit geführt werden.

Die Rauchgasführung 14 ist durch ein linkes 12 und eine rechtes 13 Rauchgasblech begrenzt und eine drehbar gelagerte Rauchgasklappe 5 ist so ausgestaltet, dass sie je nach Stellung an dem linken 12 oder rechten 13 Rauchgasblech anliegt und dadurch das Rauchgas aus der Rauchgasführung 14 in einen linken (ersten) Rauchgasabschnitt 8 und/oder einen rechten (zweiten) Rauchgasabschnitt 9 leitet.

Der linke Rauchgasabschnitt 8 verbindet die Rauchgasführung 14 durch eine Öffnung 10 mit dem linken Wärmetauscher 3 und der rechte Rauchgasabschnitt 9 verbindet die Rauchgasführung 14 durch eine rechte Öffnung 11 mit dem rechten Wärmetauscher 4.

Je nach Stellung der Rauchgasklappe 5 gelangt folglich das Rauchgas durch die Öffnung 15 des Brennraums 2 in die Rauchgasführung 14 und von dort in den linken 8 oder rechten 9 Rauchgasabschnitt.

Wie in Fig. 1 beispielhaft gezeigt ist, ist oberhalb des Brennraums 2 ein Rauchgasabzug 16 vorgesehen, der an einen Kamin anschließbar ist. Der Rauchgasabzug 16 ist mit einer weiteren Rauchgasklappe 6 ausgestattet, die zusammen mit der Rauchgasklappe 5 eine Rauchgasführungseinrichtung 22 (siehe Fig. 2) bildet. Die Rauchgasklappe 6 des Rauchgasabzugs 16 begrenzt den ersten 8 und den zweiten 9 Rauchgasabschnitt, sodass das Rauchgas bei geschlossener Rauchgasklappe 6 des Rauchgasabzugs 16 nicht durch den Rauchgasabzug 16 abgeleitet wird. Bei der oben beschriebenen Bypass-Einstellung der Rauchgasführungseinrichtung 22 wird hingegen die Rauchgasklappe 6 geöffnet, sodass das Rauchgas direkt in den Rauchgasabzug 16 abgeführt wird und nicht durch den ersten 8 bzw. zweiten 9 Rauchgasabschnitt in den ersten 3 bzw. zweiten 4 Wärmetauscher geleitet wird.

In der in Fig. 1 gezeigten Stellung der Rauchgasklappe 5 wird das Rauchgas durch den rechten Rauchgasabschnitt 9 durch die rechte Eintrittsöffnung 11 in den zweiten Wärmetauscher 4 geleitet, durchströmt diesen und gelangt durch eine Austrittsöffnung 18 am unteren Ende des rechten Wärmetauschers 4 in einen Rauchgassammelbereich 7 (siehe auch durchgezogener Pfeil).

Wenn die Rauchgasklappe 5 in der spiegelbildlichen Stellung ist, in der sie mit dem rechten Rauchgasblech 13 abdichtet, so wird das Rauchgas durch den linken Rauchgasabschnitt 8 durch die Eintrittsöffnung 10 in den ersten Wärmetauscher 3 geleitet, durchströmt diesen und gelangt durch eine Austrittsöffnung 17 in den Rauchgassammelbereich 7 (siehe auch gestrichelter Pfeil)

Der Rauchgassammelbereich 7 ist mit dem Rauchgasabzug 16 gekoppelt (nicht gezeigt), sodass das Rauchgas aus dem Rauchgassammelbereich 7 ebenso in einen Kamin abgeleitet wird.

Auf dem Weg durch den linken 3 bzw. rechten 4 Wärmetauscher gibt das Rauchgas seine Wärme an das Wärmespeichermaterial des linken 3 bzw. rechten 4 Wärmetauschers ab.

Für die Steuerung der Rauchgasführung hat der Ofen eine Steuerung 20, die in Fig. 2 mit den zugehörigen Komponenten veranschaulicht ist. Die Steuerung 20 hat einen Mikroprozessor und einen Speicher (nicht gezeigt), in dem ein Steuerprogramm abläuft, wobei ein Teil des Steuerverfahrens in Fig. 3 veranschaulicht ist.

Die Steuerung 20 ist mit einem ersten Sensor 23 gekoppelt, der die Temperatur des Wärmespeichermediums, d.h. bspw. des Wassers, des ersten, linken Wärmetauschers 3 ermittelt. Außerdem ist die Steuerung 20 mit einem zweiten Sensor 24 gekoppelt, der die Temperatur des Wärmespeichermediums, d.h. bspw. des Latentwärmespeichermaterials, des zweiten, rechten Wärmetauschers 4 ermittelt.

Die Steuerung 20 erfasst kontinuierlich oder in fest vorgegebenen Zeitintervallen die von dem ersten 23 und dem zweiten 24 Sensor gelieferten Temperaturwerte, wie es auch in Fig. 3 in den Schritten 31 und 32 gezeigt ist und vergleicht diese mit vorgegebenen Schwellwerten und steuert entsprechend die Rauchgasführungseinrichtung 22 in Abhängigkeit der erfassten Temperaturwerte, wie es in Schritt 33 gezeigt ist.

Angenommen zu Beginn einer Verbrennung ist die Rauchgasführung 22 so eingestellt, dass das Rauchgas durch den linken, bspw. wasserführenden Wärmetauscher 3 geführt wird, d.h. die Rauchgasklappe 5 dichtet auf dem rechten Rauchgasblech 13 ab. Zu Beginn der Verbrennung haben das Wärmespeichermedium des linken Wärmetauschers 3 und das Wärmespeichermedium des rechten Wärmetauschers 4 z.B. noch Raumtemperatur. Das Rauchgas wird durch den linken Wärmetauscher 3 geführt, sammelt sich im Sammelbereich 7 und wird von dort in den Kamin abgeleitet. Die Rauchgasklappe 6 des Rauchgasabzuges 16 ist geschlossen. Die Steuerung 20 sendet beim Verbrennungsstart ein Steuersignal an das Rauchgasgebläse 21, um das Rauchgas entsprechend durch den Ofen 1 zu leiten. Das Wärmespeichermedium des linken Wärmetauschers 3 erwärmt sich langsam aufgrund der Wärme, die das durch ihn strömende Rauchgas abgibt.

Zu Beginn liegen die ermittelten Temperaturwerte des linken Sensors 23 und des rechten Sensors 24 beispielhaft bei Raumtemperatur und dabei beide unterhalb eines Schwellwerts, der z.B. für das Wasser des linken Wärmetauschers 3 bei 90 °C liegt und z.B. für das Latentwärmespeichermaterial des rechten Wärmetauschers 4 bei 500 °C liegt, ohne dass die vorliegende Erfindung darauf beschränkt sein soll.

Nach einiger Zeit steigt der Temperaturwert, der von dem linken Sensor 23 an die Steuerung 20 geliefert wird, weiter an, bis er den Schwellwert von 90 °C für das Wärmespeichermedium des linken Wärmetauschers 3 übersteigt. In Reaktion darauf sendet die Steuerung ein Steuersignal an die Rauchgasführungseinrichtung 22, die in Reaktion auf das Steuersignal, die Rauchgasklappe 5 in die in Fig. 1 gezeigte Stellung bringt, sodass das Rauchgas nicht mehr durch den linken Wärmetauscher 3 strömt, sondern durch den rechten Wärmetauscher 4.

Dadurch, dass das Rauchgas nun durch den rechten Wärmetauscher 4 strömt, gibt das Rauchgas seine Wärme an das Latentwärmespeichermaterial des rechten Wärmetauschers 4 ab und der zweite Sensor 24 liefert steigende Temperaturwerte an die Steuerung 20. Stellt die Steuerung 20 nun fest, dass die von dem zweiten Sensor 24 gelieferte Temperatur oberhalb des zweiten Schwellwertes für das Latentwärmespeichermaterial liegt, so kann die Steuerung 20 z.B. ein Steuersignal senden, das die Rauchgasführungseinrichtung 22 veranlasst, die Rauchgasklappe 6 des Rauchgasabzuges 16 zu öffnen, sodass das Rauchgas direkt durch den Rauchgasabzug 16 abzieht und weder durch den linken 3 noch den rechten Wärmetauscher 4 geleitet wird.

Sollte die Steuerung 20 feststellen, dass zu dem Zeitpunkt, an dem der von dem zweiten Sensor 24 gelieferte Temperaturwert den zweiten Schwellwert übersteigt, die von dem ersten Sensor 23 gelieferte Temperatur wieder unter den ersten Schwellwert gefallen ist, kann die Steuerung 20 auch die Rauchgasklappe 5 wieder in die Ausgangsstellung zurückstellen, sodass das Rauchgas wieder durch den ersten, linken Wärmetauscher 3 strömt, anstatt die Rauchgasklappe 6 des Rauchgasabzuges 16 zu öffnen und das Rauchgas direkt durch den Rauchgasabzug 16 strömen zu lassen.

Bei manchen Ausführungsbeispielen kann die Rauchgasklappe 5 auch eine Zwischenstellung einnehmen, sodass die Rauchgasmenge aus der Rauchgasführung 14 auf den ersten Rauchgasabschnitt 8 und den zweiten Rauchgasabschnitt 9 je nach Stellung der Rauchgasklappe 5 aufgeteilt werden kann.

Dadurch kann die an den jeweiligen Wärmetauscher 3, 4 abgegebenen Wärmemenge kontrolliert werden. Bei manchen Ausführungsbeispielen wird die Rauchgasmenge auch anhand einer Temperaturanforderung ermittelt, wenn z.B. für die Raumtemperatur oder die Temperatur des Wärmespeichermediums eine bestimmte Soll-Temperatur über eine externe Steuerung vorgegeben wird.

Bei manchen Ausführungsbeispielen erkennt die Steuerung 20 auch, ob das Rauchgasgebläse 21 fehlerfrei funktioniert und im Falle einer Fehlfunktion sendet die Steuerung 20 ein Steuersignal an die Rauchgasführungseinrichtung 22, die in Reaktion darauf die Rauchgasklappe 6 öffnet, sodass das Rauchgas direkt durch den Rauchgasabzug 16 abzieht.

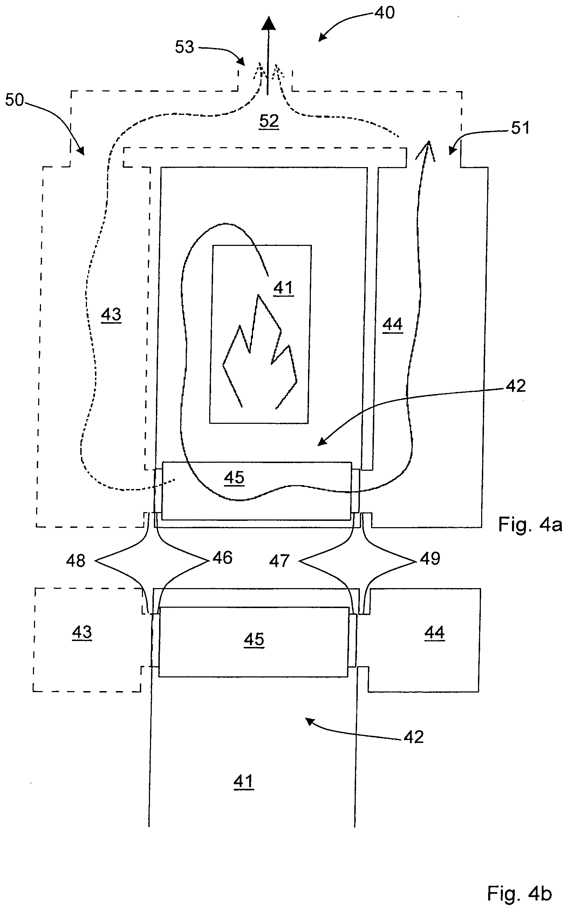

Ein zweites Ausführungsbeispiel eines Ofens 40 ist in den Fig. 4a und 4b gezeigt, wobei der Ofen 40 in seiner Funktionsweise bezüglich der selektiven Rauchgasführung im Wesentlichen dem oben beschriebenen Ofen 1 entspricht und bspw. die oben erklärte Steuerung 20 aufweisen kann, die das oben ausgeführte Verfahren ausführt. Im Gegensatz zum oben beschriebenen Ofen 1 hat der Ofen 40 ein Brennraummodul 41 an dessen in Fig. 4a bzw. 4b linken Seite ein linkes Wärmetauschermodul 43 austauschbar angeordnet ist, das hier beispielhaft mit Wasser als Wärmespeichermedium ausgeführt ist, und an dessen in Fig. 4a bzw. 4b rechten Seite ein rechtes Wärmetauschermodul 44 austauschbar angeordnet ist, das mit einem Latentwärmespeichermedium ausgestattet ist.

Das linke 43 und das rechte 44 Wärmetauschermodul können z.B. im Falle eines Defekts gegen ein Ersatz-Wärmetauschermodul ausgetauscht werden oder gegen ein anderes Wärmetauschermodul, das z.B. ein anderes Wärmespeichermedium verwendet, anders dimensioniert ist und/oder eine andere Formgebung bzw. äußere Gestaltung hat usw.

Rauchgas, das bei der Verbrennung im Brennraummodul 41 entsteht, leitet eine Rauchgasführung 42 in das linke 43 und das rechte 44 Wärmetauschermodul. In der Rauchgasführung 42 ist eine Rauchgasführungseinrichtung 45 angeordnet, die, wie oben bereits im Zusammenhang mit dem Ofen 1 ausgeführt, je nach Einstellung das Rauchgas in das linke 43 und/oder rechte 44 Wärmetauschermodul leitet.

Die Rauchgasführungseinrichtung 45 hat einen linken Rauchgasführungsabschnitt 46, der mit einem entsprechenden Rauchgaseinlass 48 des linken Wärmetauschermoduls 43 gekoppelt ist. Außerdem hat die Rauchgasführungseinrichtung 45 einen rechten Rauchgasführungsabschnitt 47, der mit entsprechenden Rauchgaseinlass 49 des rechten Wärmetauschermoduls 44 gekoppelt ist.

Der linke 46 und rechte 47 Rauchgasführungsabschnitt sind als Schnittstelle ausgebildet, an die die entsprechenden Rauchgaseinlässe 48 und 49 des linken 43 bzw. rechten 44 Wärmetauschermoduls eingreifen können. Dazu hat z.B. der linke 46 bzw. der rechte 47 Rauchgasführungsabschnitt am Ende eine Muffe, in die die entsprechenden Rauchgaseinlässe 48 und 49 eingreifen und so eine dichte Verbindung mit dem linken 43 bzw. rechten 44 Wärmetauschermodul herstellen, sodass kein Rauchgas beim Durchströmen entweicht.

Auf dem Weg durch das linke 43 bzw. rechte 44 Wärmetauschermodul gibt das Rauchgas seine Wärme an das Wärmespeichermaterial des linken 43 bzw. rechten 44 Wärmetauschermoduls ab. Nach Passieren des linken 43 bzw. rechten 44 Wärmetauschermoduls gelangt das Rauchgas durch jeweils einen Rauchgasauslass 50 bzw. 51 des linken 43 bzw. rechten 44 Wärmetauschermoduls in einen Rauchgassammelbereich 52, der über einen Rauchgasauslass 53 mit einem Kaminanschluss oder dergleichen koppelbar ist.

## Patentansprüche

1. Ofen zur Wärmeerzeugung, insbesondere Holzofen, wie Scheitholzofen oder Pelletofen, umfassend:
einen Brennraum (2; 41),
einen ersten (3; 43) und einen zweiten (4; 44) Wärmetauscher,
eine Rauchgasführung (14; 42), die mit dem Brennraum (2; 41) verbunden ist und die wenigstens einen ersten Rauchgasabschnitt (8; 46) und einen zweiten Rauchgasabschnitt (9; 47) aufweist, wobei der erste Rauchgasabschnitt (8; 46) mit dem ersten Wärmetauscher (3; 43) koppelbar ist und der zweite Rauchgasabschnitt (9; 47) mit dem zweiten Wärmetauscher (4; 44) koppelbar ist,
**gekennzeichnet durch**:
eine Rauchgasführungseinrichtung (5, 6, 22; 45), die dazu ausgelegt ist, Rauchgas wahlweise in den ersten und/oder zweiten Rauchgasabschnitt (8, 9; 46, 47) zu leiten,
wobei der Brennraum als Brennraummodul (41) ausgebildet ist und der erste und/oder der zweite Wärmetauscher als austauschbares Wärmetauschermodul (43, 44) des Ofens ausbildet ist.

2. Ofen zur Wärmeerzeugung nach Anspruch 1, weiter eine Sammelrauchgasführung (7; 52) aufweisend, in der das Rauchgas aus dem ersten und dem zweiten Rauchgasabschnitt (8, 9; 46, 47) nach Passieren des ersten und zweiten Wärmetauschers (3, 4; 43, 44) gesammelt wird.

3. Ofen zur Wärmeerzeugung nach einem der vorhergehenden Ansprüche, weiter einen Rauchgasabzug (16) aufweisend, wobei die Rauchgasführungseinrichtung (5, 6, 22) weiter dazu ausgelegt ist, Rauchgas direkt in den Rauchgasabzug (16) zu leiten.

4. Ofen zur Wärmeerzeugung nach Anspruch 1, wobei der erste Wärmetauscher (3; 43) ein erstes Wärmespeichermedium und der zweite Wärmetauscher (4; 44) ein zweites Wärmespeichermedium aufweist, wobei insbesondere das erste und das zweite Wärmespeichermedium unterschiedlich sind.

5. Ofen zur Wärmeerzeugung nach einem der vorhergehenden Ansprüche, wobei die Rauchgasführungseinrichtung (5, 6, 22) wenigstens eine Rauchgasklappe (5, 6) und/oder Drehscheibe aufweist.

6. Ofen zur Wärmeerzeugung nach einem der vorhergehenden Ansprüche, weiter ein Rauchgasgebläse (21) aufweisend, das dazu eingerichtet ist, das Rauchgas durch den ersten und/oder zweiten Rauchgasabschnitt (8, 9) zu leiten.

7. Ofen zur Wärmeerzeugung nach einem der vorhergehenden Ansprüche, weiter eine Steuerung (20) aufweisend, die dazu eingerichtet ist, die Rauchgasführungseinrichtung (5, 6, 22) in Abhängigkeit wenigstens eines Betriebsparameters zu steuern, der spezifisch für den ersten und/oder zweiten Wärmetauscher (3, 4) ist.

8. Verfahren zum Steuern einer Rauchgasführung in einem Ofen zur Wärmeerzeugung, insbesondere einem Ofen nach einem der vorhergehenden Ansprüche, wobei der Ofen (1; 40) umfasst:
einen Brennraum (2; 41),
eine Rauchgasführung (14; 42), die mit dem Brennraum (2; 41) verbunden ist und die wenigstens einen ersten Rauchgasabschnitt (8; 46) und einen zweiten Rauchgasabschnitt (9; 47) aufweist, wobei der erste Rauchgasabschnitt (8; 46) mit einem ersten Wärmetauscher (3; 43) koppelbar ist und der zweite Rauchgasabschnitt (9; 47) mit einem zweiten Wärmetauscher (4; 44) koppelbar ist, und
eine Rauchgasführungseinrichtung (5, 6, 22; 45), die dazu ausgelegt ist, Rauchgas wahlweise in den ersten und/oder zweiten Rauchgasabschnitt (8, 9; 46, 47) zu leiten,
wobei das Verfahren die Schritte umfasst:
Erfassen (31, 32) wenigstens eines Betriebsparameters, der spezifisch für den Betriebszustand des ersten und/oder zweiten Wärmetauschers (3, 4; 43, 44) ist;
Steuern (33) der Rauchgasführungseinrichtung (5, 6, 22; 45) in Abhängigkeit des wenigstens einen erfassten Betriebsparameters, **dadurch gekennzeichnet, dass** der Brennraum als Brennraummodul (41) ausgebildet ist und der erste und/oder zweite Wärmetauscher als austauschbares Wärmetauschermodul (43, 44) des Ofens ausbildet ist.

9. Verfahren nach Anspruch 8, wobei der Betriebsparameter eine Betriebstemperatur des ersten und/oder zweiten Wärmetauschers (3, 4; 43, 44) spezifiziert.

## Claims

1. Furnace for heat generation, in particular wood furnace, such as firewood furnace or pellet furnace, comprising:
a combustion chamber (2; 41),
a first (3; 43) and a second (4; 44) heat exchanger,
a flue-gas guide (14; 42) which is connected to the combustion chamber (2; 41) and which has at least one first flue-gas section (8; 46) and one second flue-gas section (9; 47), wherein the first flue-gas section (8; 46) is couplable to the first heat exchanger (3; 43) and the second flue-gas section (9; 47) is couplable to the second heat exchanger (4; 44),
**characterized by**
a flue-gas guide device (5, 6, 22; 45) which is designed to conduct flue gas selectively into the first and/or second flue-gas section (8, 9; 46, 47),
wherein the combustion chamber is in the form of a combustion chamber module (41), and the first and/or the second heat exchanger is in the form of an exchangeable heat exchanger module (43, 44) of the furnace.

2. Furnace for heat generation according to Claim 1, furthermore having a collecting flue-gas guide (7; 52) in which the flue gas from the first and from the second flue-gas section (8, 9; 46, 47) is collected after passing through the first and second heat exchangers (3, 4; 43, 44).

3. Furnace for heat generation according to one of the preceding claims, furthermore having a flue-gas extractor (16), wherein the flue-gas guide device (5, 6, 22) is furthermore designed to conduct flue gas directly into the flue-gas extractor (16).

4. Furnace for heat generation according to Claim 1, wherein the first heat exchanger (3; 43) has a first heat storage medium and the second heat exchanger (4; 44) has a second heat storage medium, wherein in particular, the first and the second heat storage medium differ.

5. Furnace for heat generation according to one of the preceding claims, wherein the flue-gas guide device (5, 6, 22) has at least one flue-gas flap (5, 6) and/or rotary disc.

6. Furnace for heat generation according to one of the preceding claims, furthermore having a flue-gas blower (21) which is designed to conduct the flue gas through the first and/or second flue-gas section (8, 9).

7. Furnace for heat generation according to one of the preceding claims, furthermore having a controller (20) which is designed to control the flue-gas guide device (5, 6, 22) in a manner dependent on at least one operating parameter which is specific to the first and/or second heat exchanger (3, 4).

8. Method for controlling a flue-gas guide in a furnace for heat generation, in particular in a furnace according to one of the preceding claims, wherein the furnace (1; 40) comprises:
a combustion chamber (2; 41),
a flue-gas guide (14; 42) which is connected to the combustion chamber (2; 41) and which has at least one first flue-gas section (8; 46) and one second flue-gas section (9; 47), wherein the first flue-gas section (8; 46) is couplable to the first heat exchanger (3; 43) and the second flue-gas section (9; 47) is couplable to the second heat exchanger (4; 44), and
a flue-gas guide device (5, 6, 22; 45) which is designed to conduct flue gas selectively into the first and/or second flue-gas section (8, 9; 46, 47),
wherein the method comprises the steps:
detecting (31, 32) at least one operating parameter which is specific to the operating state of the first and/or second heat exchanger (3, 4; 43, 44);
controlling (33) the flue-gas guide device (5, 6, 22; 45) in a manner dependent on the at least one detected operating parameter, **characterized in that** the combustion chamber is in the form of a combustion chamber module (41), and the first and/or the second heat exchanger is in the form of an exchangeable heat exchanger module (43, 44) of the furnace.

9. Method according to Claim 8, wherein the operating parameter specifies an operating temperature of the first and/or second heat exchanger (3, 4; 43, 44).

## Revendications

1. Four pour production de chaleur, en particulier four à bois, tel qu'un four à bois de chauffage ou un four à granulés, comprenant :
une chambre de combustion (2 ; 41),
un premier échangeur de chaleur (3 ; 43) et un deuxième échangeur de chaleur (4 ; 44),
une conduite de gaz de fumée (14 ; 42), qui est reliée à la chambre de combustion (2 ; 41) et qui comprend au moins une première section de gaz de fumée (8 ; 46) et une deuxième section de gaz de fumée (9 ; 47), dans lequel la première section de gaz de fumée (8 ; 46) peut être couplée au premier échangeur de chaleur (3 ; 43) et la deuxième section de gaz de fumée (9 ; 47) peut être couplée au deuxième échangeur de chaleur (4 ; 44),
**caractérisé par** :
un dispositif de guidage de gaz de fumée (5, 6, 22 ; 45), qui est conçu pour guider les gaz de fumée sélectivement dans la première et/ou la deuxième section de gaz de fumée (8, 9 ; 46, 47),
dans lequel la chambre de combustion est réalisée sous la forme d'un module de chambre de combustion (41) et le premier et/ou le deuxième échangeur de chaleur est réalisé sous la forme d'un module d'échangeur de chaleur (43, 44) remplaçable du four.

2. Four pour production de chaleur selon la revendication 1, comprenant en outre un guidage collecteur de gaz de fumée (7 ; 52), dans lequel les gaz de fumée provenant de la première et de la deuxième section des gaz de fumée (8, 9 ; 46, 47) sont collectés après être passés par le premier et le deuxième échangeur de chaleur (3, 4 ; 43, 44).

3. Four pour production de chaleur selon l'une quelconque des revendications précédentes, comprenant en outre un évent des gaz de fumée (16), dans lequel le dispositif de guidage des gaz de fumée (5, 6, 22) est conçu en outre pour guider les gaz de fumée directement dans l'évent des gaz de fumée (16).

4. Four pour production de chaleur selon la revendication 1, dans lequel le premier échangeur de chaleur (3 ; 43) comprend un premier milieu d'accumulation de chaleur et le deuxième échangeur de chaleur (4 ; 44) comprend un deuxième milieu d'accumulation de chaleur, dans lequel le premier et le deuxième milieu d'accumulation de chaleur sont en particulier différents.

5. Four pour production de chaleur selon l'une quelconque des revendications précédentes, dans lequel le dispositif de guidage des gaz de fumée (5, 6, 22) comprend au moins un clapet des gaz de fumée (5, 6) et/ou un disque rotatif.

6. Four pour production de chaleur selon l'une quelconque des revendications précédentes, comprenant en outre une soufflante des gaz de fumée (21), qui est conçue pour guider les gaz de fumée à travers la première et/ou la deuxième section de gaz de fumée (8, 9).

7. Four pour production de chaleur selon l'une quelconque des revendications précédentes, comprenant en outre une commande (20), qui est conçue pour commander le dispositif de guidage des gaz de fumée (5, 6, 22) en fonction d'au moins un paramètre de fonctionnement, qui est spécifique du premier et/ou du deuxième échangeur de chaleur (3, 4).

8. Procédé de commande d'un guidage des gaz de fumée dans un four pour production de chaleur, en particulier un four selon l'une quelconque des revendications précédentes, dans lequel le four (1 ; 40) comprend :
une chambre de combustion (2 ; 41),
un guidage des gaz de fumée (14 ; 42), qui est relié à la chambre de combustion (2 ; 41) et qui comprend au moins une première section de gaz de fumée (8 ; 46) et une deuxième section de gaz de fumée (9 ; 47), dans lequel la première section de gaz de fumée (8 ; 46) peut être couplée à un premier échangeur de chaleur (3 ; 43) et la deuxième section de gaz de fumée (9 ; 47) peut être couplée à un deuxième échangeur de chaleur (4 ; 44), et
un dispositif de guidage des gaz de fumée (5, 6, 22 ; 45), qui est conçu pour guider les gaz de fumée sélectivement dans la première et/ou la deuxième section de gaz de fumée (8, 9 ; 46, 47),
dans lequel le procédé comprend les étapes de :
détection (31, 32) d'au moins un paramètre de fonctionnement, qui est spécifique de l'état de fonctionnement du premier et/ou du deuxième échangeur de chaleur (3, 4 ; 43, 44) ;
commande (33) du dispositif de guidage des gaz de fumée (5, 6, 22 ; 45) en fonction des au moins un paramètres de fonctionnement détectés, **caractérisé en ce que** la chambre de combustion est réalisée sous la forme d'un module de chambre de combustion (41) et le premier et/ou le deuxième échangeur de chaleur est réalisé sous la forme d'un module d'échangeur de chaleur (43, 44) interchangeable du four.

9. Procédé selon la revendication 8, dans lequel le paramètre de fonctionnement spécifie une température de fonctionnement du premier et/ou du deuxième échangeur de chaleur (3, 4 ; 43, 44).
